# EUROPEAN PATENT APPLICATION

(11) **EP 1 790 448 A1**
(43) Date of publication of application: **30.05.2007**
(21) Application number: 05425833.0
(22) Date of filing: 24.11.2005
(51) Int. Cl.: B29B 9/14, B29B 15/12

(54) **Device for manufacturing a long-fiber polymeric compound**

(71) Applicant: LATI Industria Termoplastici S.p.A., 21040 Vedano Olona (Varese) (IT)
(72) Inventor: Imbrighi, Diego, 20020 Lainate (Milano) (IT)
(74) Representative: Vittorangeli, Lucia

(57) **Abstract**

The invention relates to a device (10) for manufacturing polymer prepregs or compounds containing long fibers. The device comprises: an impregnation chamber (11) having at least one inlet nozzle (12) and one outlet nozzle (13) through which the fibers are drawn; a plurality of stakes (14,15) suitable to impose a broken line run to the fibers. At least one of the stakes comprises an ejection area (16) for the fluid polymer. The ejection area comprises, in turn, a plurality of ejection holes (17) in hydraulic connection with an extruder.

## Description

The present invention relates to a device for manufacturing a polymeric compound containing long fibers, particularly for manufacturing prepregs or semifinished composites. Even more particularly, one of the preferred applications of the present invention is manufacturing, by means of pultrusion, thermoplastic or thermosetting polymeric pellets that are charged with organic and/or inorganic fibers, such as: stainless steel, graphite (or carbon), glass, and/or aramide fibers.

Traditionally, pellets are approximatively cylindrical prepregs, about 2,5 - 3,5 mm long and with 2,5 - 3,5 mm diameter. They consist of a polymeric mass (called the matrix), with fiber pieces (called the chopped strands) being loosened and randomly oriented therein. The fiber percentage usually ranges from 10% to 60% by weight, whereas the typical size of the chopped strands is as follows: lengths ranging within 3 ÷ 6 mm and diameters ranging within 10 ÷ 17 µm.

This known type of pellets is commonly obtained by means of extrusion. Particularly, the (typically thermoplastic) polymer is fluidized, the desired amount of fiber chopped in tufts is mixed thereto, and finally the fluid polymer mass containing the chopped strands is extruded to form the above cylindrical prepregs.

This type of pellets is commonly used in the industry as a semi-processed material for obtaining polymer products having improved characteristics compared with those that would be obtained using only the polymer.

For example, the presence of electrically conductive fibers, such as stainless steel or carbon within the polymer matrix (which is usually dielectric), allows considerable variations in the electric characteristics of the material and, accordingly, of the product.

Another effect commonly sought by introducing fibers in the polymer mass is to improve the mechanical characteristics, such as of stiffness and/or strength. To the purpose, glass, carbon and aramide fibers are normally used.

It occurred that, any other condition being the same, increasing the length of the fiber pieces brings an unexpected benefit to the improvement in the mechanical characteristics of the material. This kind of prepreg, in which the reinforcement fibers have a length comparable with or equal to that of the prepreg, is called the "long fiber" prepreg.

To the purpose of explaining the above-mentioned improvement in the characteristics, it should be considered that, with reference to an impact test carried out in compliance with ASTM D256 standard (notched Izod), test samples obtained with Polyamide 66 when 50%-reinforced with traditional glass chopped strands give 160 J/m average impact strength, whereas similar test samples obtained with the same polymer (Polyamide 66) when reinforced with glass "long fibers" at the same percentage give an average impact strength to breakage of 360 J/m.

Accordingly, the manufacture of long fiber pellets is very interesting within the field of polymer prepreg manufacture, and it will be more and more in the future.

This production is very uncomfortable when equipment is employed which is traditionally used for manufacturing short fiber-containing pellets.

It has been observed, in fact, that after the chopped strands have been fed to the extruder, their length is further reduced due to the breakings resulting from the mechanical action of the extruder. Particularly, it has been observed that, at the end of the manufacturing process, the length of the chopped strands contained in the known pellets results to be decreased until ranging, on average, between 50 and 500 µm. For this reason, feeding fiber pieces of the desired length into the polymer fluid mass does not lead to satisfactory results.

It should be also noted herein that wettability problems often occur for the dry fiber by the fluid polymer, particularly when the latter is of a thermoplastic type. The thermoplastic polymer, in fact, at the typical temperatures of the extrusion processes, still has a high viscosity, which makes the same difficult to penetrate through the fiber rovings or tufts, particularly when the latter are compact and contain a great number of fibers.

Simply contacting the dry fiber rovings with the molten polymer is not sufficient to ensure that the polymer penetrates through the fibers.

Accordingly, the object of the present invention is to provide a device for manufacturing polymer material containing long fibers, which overcomes the drawbacks cited with reference to the prior art.

Particularly, the task of the present invention is to provide a device for manufacturing thermoplastic polymer prepregs containing long fibers.

Even more particularly, another task of the present invention is to provide a device for manufacturing thermoplastic polymer pellets containing fibers of a length comparable with or equal to that of the pellets.

This object and these tasks are achieved by means of a device according to claim 1 and by means of a system according to claim 24.

In order to better understand the present invention and appreciate the advantages of the same, some exemplary embodiments thereof will be described below, with reference to the annexed figures, in which:

Fig. 1 is a plan, schematic view of a system for manufacturing pellets according to the invention;

Fig. 2 is a plan, schematic view of a detail of the system from Fig. 1;

Fig. 3.a is a plan, partially sectional view of a first embodiment of the device according to the invention, similar to the particular designated with III in Fig. 2;

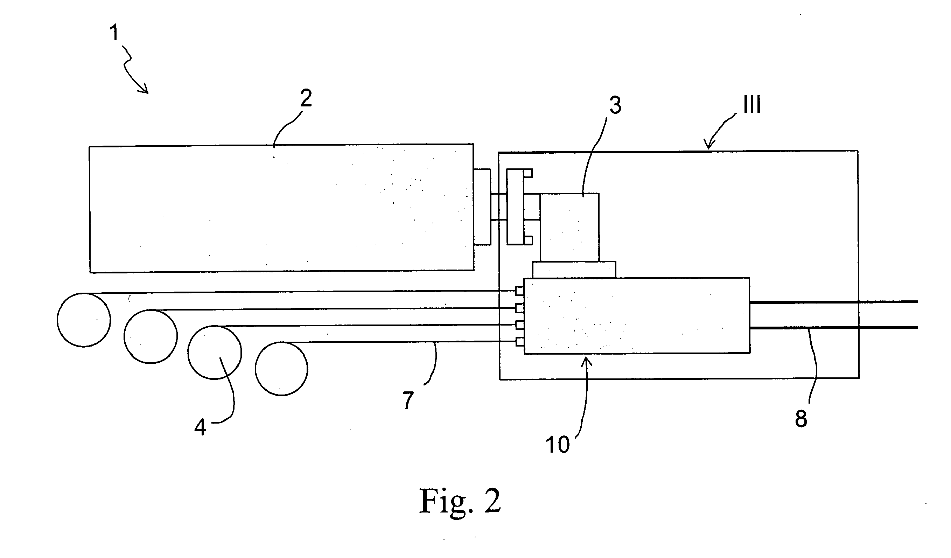

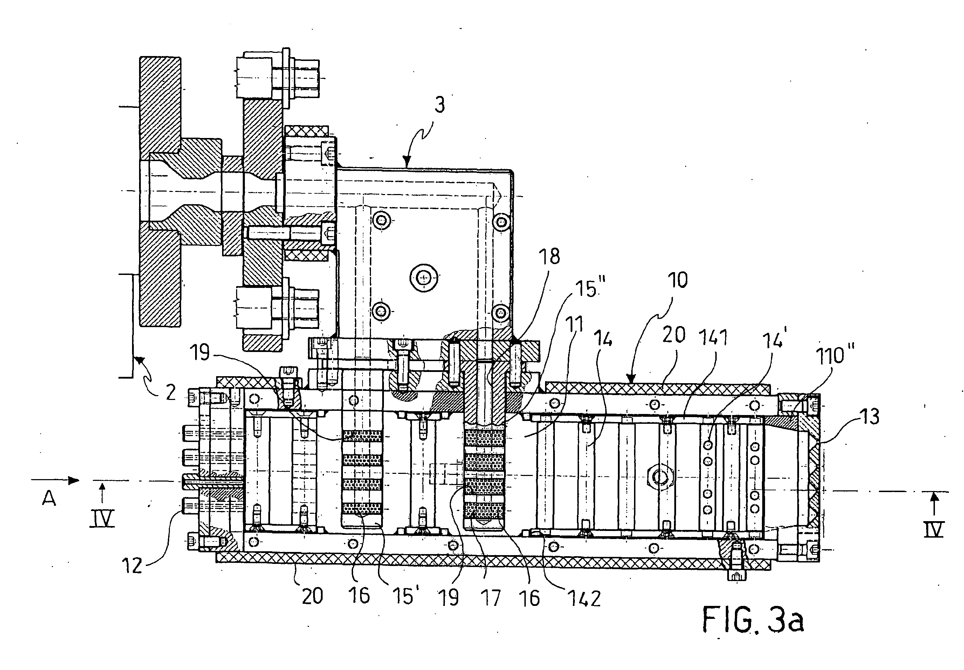

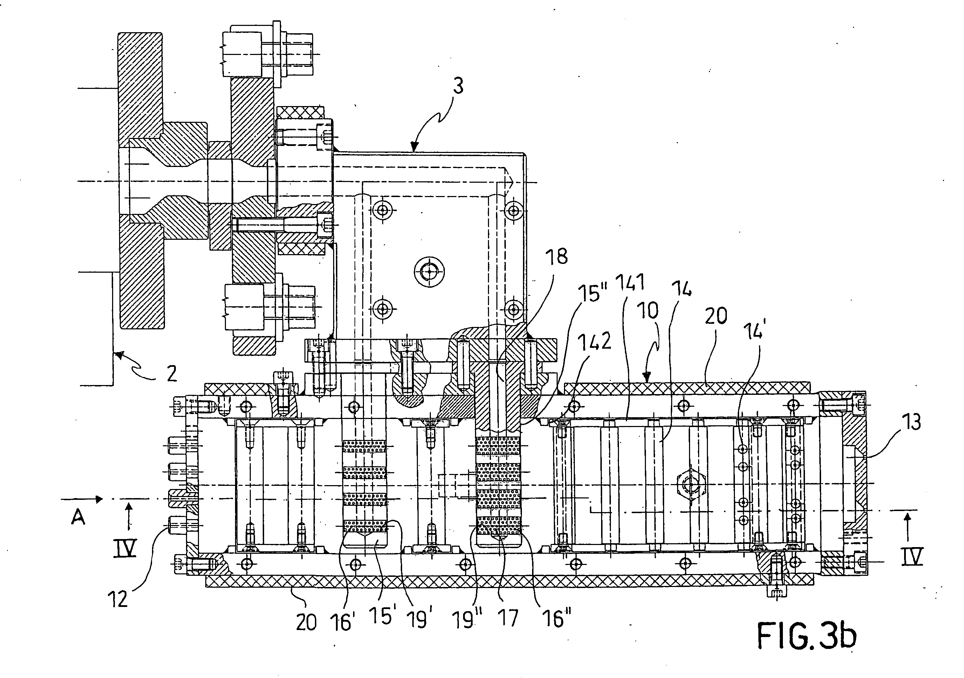

Fig. 3.b is a plan, partially sectional view of a second embodiment of the device according to the invention, similar to the detail designated with III in Fig. 2;

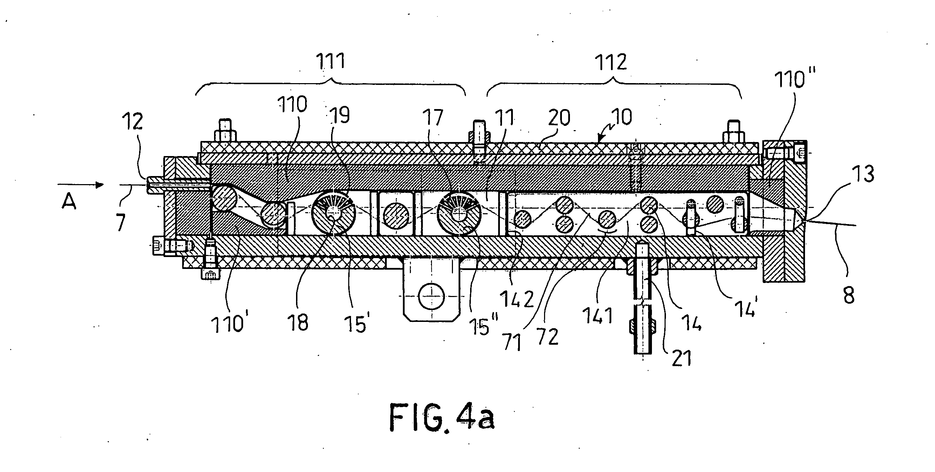

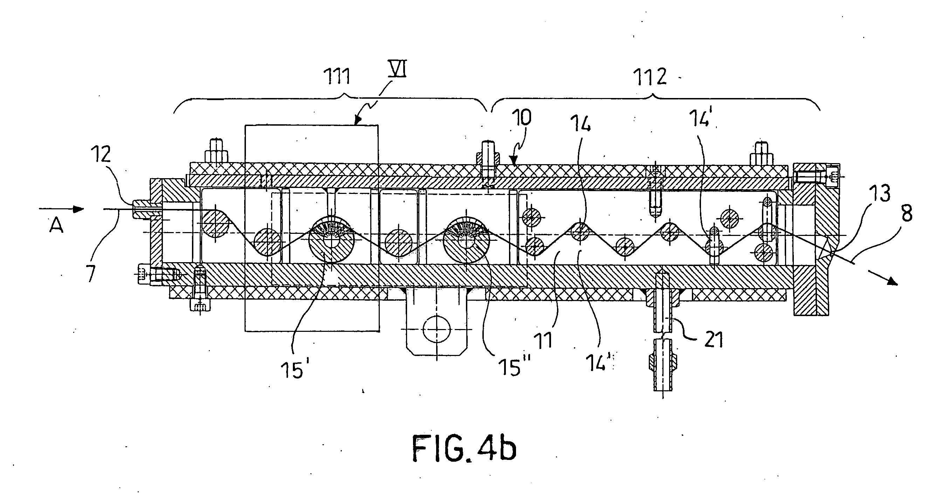

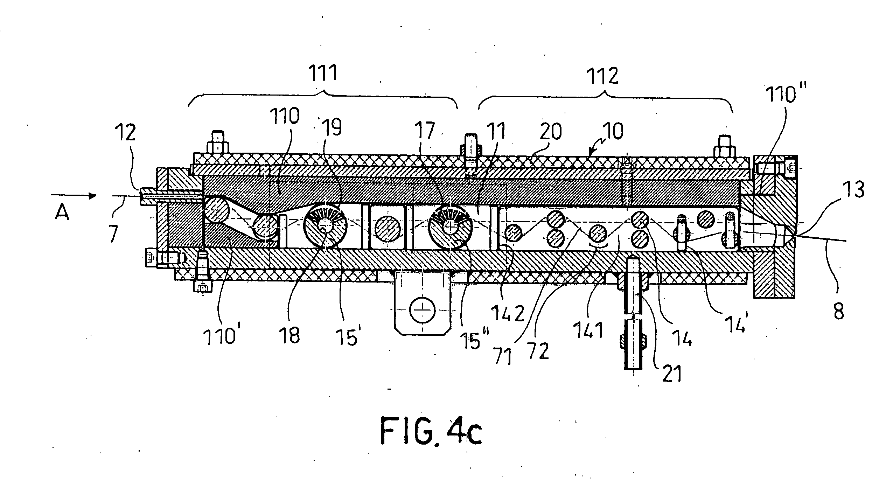

Fig. 4.a is a sectional view according to line IV-IV from Fig.3.a;

Fig. 4.b is a sectional view according to line IV-IV from Fig.3.b;

Fig. 4.c is a sectional view of a third embodiment of the device according to the invention, similar to that from Fig. 4.b;

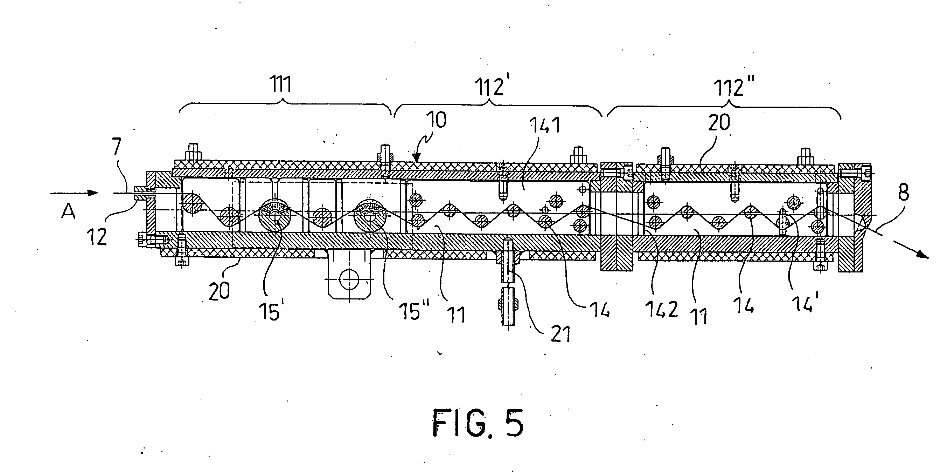

Fig. 5 is a sectional view, similar to the views of Fig. 4, of a third embodiment of the device according to the invention;

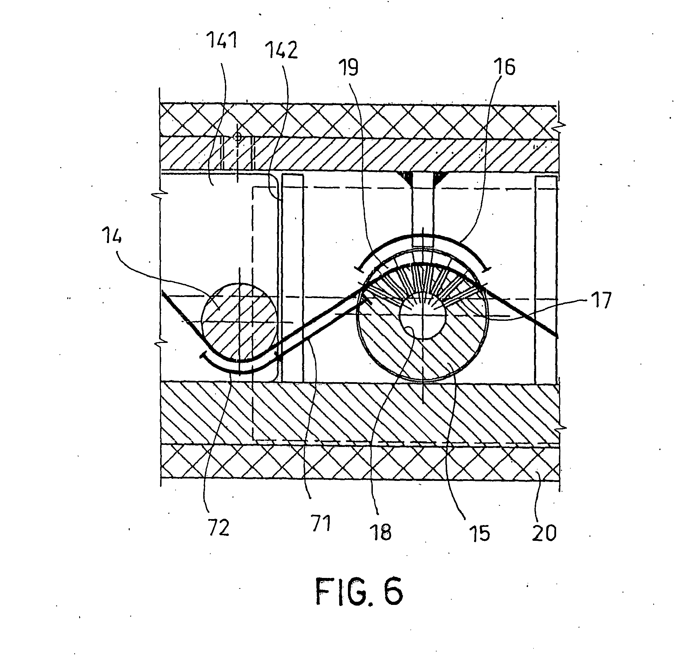

Fig. 6 is an enlarged view of the detail designated with VI in Fig. 4.b.

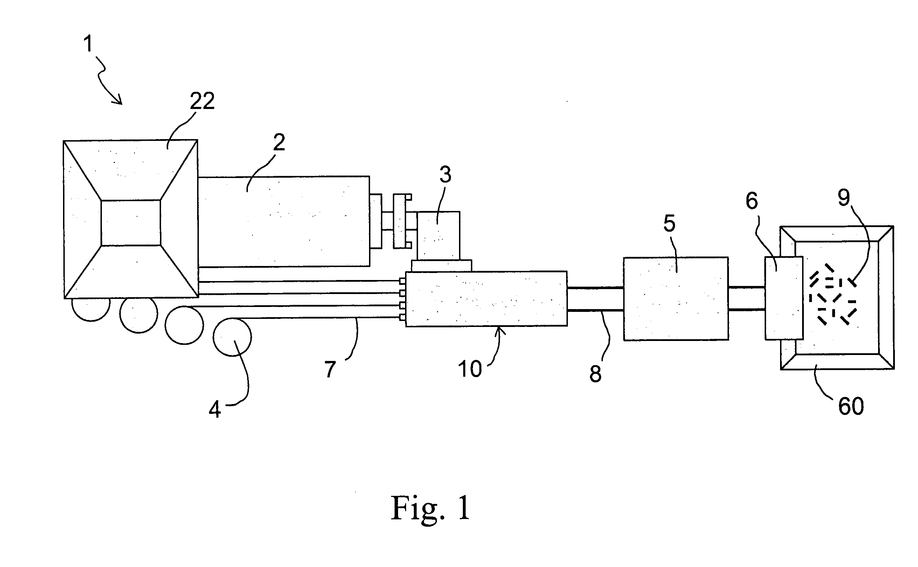

In Fig. 1, a system according to the invention is generally designated with 1. The system 1 comprises a dispensing apparatus 2 suitable to supply fluid polymer to the system.

In the illustrated embodiment, the polymer dispensing apparatus is an extruder 2, known per se, which is suitable to dispense a thermoplastic polymer in its molten state. In other possible embodiments, the dispensing apparatus 2 is suitable to dispense a thermosetting polymer in its fluid state.

The extruder 2 is provided with one or more hoppers 22 for feeding the crude thermoplastic polymer and any modifiers thereof. In a manner known per se, the extruder 2 comprises heating means (not shown) which are suitable to heat the polymer until it melts, and in a manner also known per se, a system (not shown) with one or more worm screws (either single-screw or twin-screw) for moving the thermoplastic polymer.

At the outlet of the fluid polymer dispenser 2 there is provided a pipe fitting 3 which is suitable to put the dispenser 2 in fluid communication with the device for manufacturing polymer pellets charged with long fibers, also called the impregnator 10 herein below. The impregnator 10 will be described later.

The system 1 is schematically completed by a series of reels 4, a dragging device 5 and a cutting device 6.

The reels 4 supply the dry fiber rovings 7 that pass through the impregnator 10 and exit therefrom impregnated with polymer. The impregnated rovings 8, in structural continuity with the dry fiber rovings 7, are pulled through the system by means of the dragging device 5, known per se, such as to ensure that the dry fiber 7 is fed to the impregnator.

This particular technique of manufacturing thermoplastic prepregs containing long fibers is commonly known as the pultrusion.

In accordance with the particular embodiment illustrated, the impregnated rovings 8 are then fed to a cutting device 6 that reduces the same to the desired length, e.g. it cuts them in pellets 9. Downstream of the cutting device 6 a collector 60 suitable to collect the prepregs, such as the pellets 9, before they are sent to any subsequent processing and/or packaging steps.

The impregnator 10 is the operating core of the whole system 1. Such as in the embodiments illustrated in Fig. 3.a and 3.b, it comprises a impregnation chamber 11 having at least one inlet nozzle 12 and at least one outlet nozzle 13. The inlet nozzle 12 is suitable to be passed through by the dry fibers 7, whereas the outlet nozzle 13 is suitable to be passed through by the impregnated fibers 8.

In the embodiment such as illustrated in Fig. 3.a, there are four inlet nozzles 12 and four outlet nozzles 13. In other words, the impregnation chamber as depicted in Fig. 3. a has been designed so as to obtain as many impregnated rovings 8 as the dry fiber rovings 7. In this case, accordingly, one outlet nozzle 13 is provided per each inlet nozzle 12.

On the other hand, in the embodiment such as illustrated in Fig. 3.b, there are four inlet nozzles 12 and two outlet nozzles 13. In other words, the impregnation chamber 11 as depicted in Fig. 3.b has been designed so as to obtain two impregnated rovings 8 from four dry fiber rovings 7. In this case, accordingly, one outlet nozzle 13 is provided every two inlet nozzles 12.

In other possible embodiments of the impregnation chamber 11, each impregnated roving 8 can be manufactured from a different number of dry fiber rovings 7, such as three or four. In these cases, one outlet nozzle 13 will be provided every three or four inlet nozzles 12.

This characteristic of the impregnation chamber 11 is selected by the designer in view of the particular requirements. In fact, joining a number of relatively small (or low-tex) fiber rovings (e.g. 1200 tex) during the impregnation process, allows one to obtain impregnated rovings 8 of relatively large size (e.g. 4800 tex), thereby limiting the typical wettability problems of the dry fiber rovings 7 of the same large size.

Within the impregnation chamber 11 there is arranged a plurality of stakes 14 suitable to impose a broken line run to the fibers passing through the impregnation chamber 11.

In the particular embodiments illustrated, the stakes 14 are arranged perpendicular both to the direction of the fiber rovings and their run, indicated with arrow A in Fig. 4. The diameter of the stakes 14 is preferably comprised between 5 mm and 200 mm.

As discussed above, the arrangement of the stakes is selected such as to impose to the fibers a run that can be generally defined as a broken line or zigzag. The rectilinear tracts 71 of the fiber pathway are joined to each other by means of small curves 72 made by the fibers to follow the profile of the stakes 14. When the fiber rovings are subjected to a pure tensile strength, they take an approximatively circular section, whereas when they follow the curves 72 of the pathway, they are induced to take a flattened section and then expand in the width direction. This effect, which is repeated at each stake 14, has the effect of creating a greater outer surface of the roving and a greater distance between the individual fibers within the roving.

At least one ejector stake 15, among all the stakes 14, comprises an ejection area 16 for the fluid polymer. The ejection area 16 comprises a plurality of ejection holes 17 which are placed in hydraulic connection, through pipes 18 and through the pipe fitting 3, with the fluid polymer dispenser 2, such as the extruder 2. The ejection holes 17 preferably have a radial direction relative to the ejector stake 15. The diameter of the ejection holes 17 preferably ranges between 0,5 mm and 2,5 mm.

The diameter of the ejector stake 15 ranges between 10 mm and 200 mm. Those stakes 14 that do not comprise ejection areas generally have lower diameters, ranging between 5 mm and 50 mm.

As it may be clearly seen in Fig. 4, the ejection area 16 coincides with a curve 72 imposed to the fiber pathway by the ejector stake 15. Whereby, the fluid polymer is ejected when the fiber roving takes the most suitable configuration, i.e. a flattened section with a large outer surface and increased distance between the individual fibers.

In addition, fluid polymer ejection is carried out in a direction, as imposed by the run of the ejection holes 17, proximate to the perpendicular to the fiber. The radial direction of the holes 17 would be exactly perpendicular to the fibers if the curve 72 were an arc of circle. In the embodiments from Fig. 4, however, the ejection area 16 has been formed in a trench 19 provided on the ejector stake 15 profile, rather than on the original profile thereof. By this option, a lateral containment of the fiber roving is obtained, and the fiber roving is prevented from accidentally sliding along the ejector 15 during the manufacturing cycle, which would mean the same no longer passing through the ejection area 16. The provision of the trench 19 imposes a run slightly different from circular to the local curve 72, and the direction of the holes 17, which is radial relative to the stake 15, slightly diverges from the perpendicular direction to the fiber.

In the illustrated embodiments, the ejection holes 17 are arranged in longitudinal arrays relative to the direction of the fibers. The arrays are preferably offset from each other, so as to obtain an overall staggered, quincuncial arrangement for the ejection holes 17.

The particular embodiments illustrated in Fig. 3 and 4, comprise two ejector stakes 15' and 15" alternating with a stake 14.

In accordance with other possible embodiments, a different number of ejector stakes 15, such as one or three, may be provided.

The provision of a stake 14 placed between the two ejector stakes 15' and 15", allows obtaining the ejection areas 16' and 16" of the two ejector stakes 15' and 15" to be placed at the same part, the upper part in the illustrated embodiments. Other solutions are nevertheless possible, in accordance with the particular design requirements.

In the illustrated embodiments, it is understood that the width of the ejection areas 16 increases in the direction A. Particularly, the ejection area 16' which is first met by the fiber roving moving in the direction A, has a smaller width than the ejection area 16" which is met later. This difference can be clearly seen in Fig. 3.a and 3.b.

In Fig. 3 it can be also seen that, in the particular illustrated embodiments, the number of ejection holes 17 also increases in the direction A. In fact, the ejection area 16' comprises three arrays, whereas the ejection area 16" comprises five arrays.

In the illustrated embodiments, the trenches also have increasing width in the direction A, which is the reason why the trench 19' where the ejection area 16' is formed, has a smaller width than the trench 19" in which the ejection area 16" is formed.

The increase in the width of the ejection areas 16, as well as the increase in the number of hole arrays 17 and the increase in the width of the trenches 19, allows taking into account the fact that the fiber rovings, along the pathway within the impregnation chamber, increase their section after fluid polymer has been absorbed between the fibers.

In accordance with an embodiment of the invention, the impregnation chamber 11 also comprises heating means 20 suitable to maintain the thermoplastic polymer in its molten state as long as it is within the chamber. In accordance with the embodiments illustrated in the annexed figures, the heating means can be electric resistances 20.

In accordance with the embodiments illustrated in Fig. 4.a, 4.b and 5, the impregnation chamber 11 also comprises a temperature-detecting probe 21. The temperature-detecting probe can be for example a thermocouple 21 controlling the electric resistances 20.

In accordance with the illustrated embodiments, the impregnation chamber 11 is divided into a first ejection sub-chamber 111 and a second continuity sub-chamber 112. The ejection sub-chamber 111 is that part in the impregnation chamber 11 where the ejector stakes 15, or the at least one ejector stake 15, are arranged. The continuity sub-chamber 112, which is placed next to the ejection sub-chamber 111 in the direction A, contains stakes 14 that are only suitable to obtain the deviation of the fibre rovings.

In accordance with the preferred embodiments, the impregnation 111 and continuity 112 sub-chambers are formed to be modular. This solution allows those skilled in the art to select, per each type of production, the preferred configuration of the impregnation chamber 11.

For example, in the embodiments illustrated in Fig. 5, the number of deviation stakes 14 has been increased simply by adding, after the first continuity sub-chamber 112', a second continuity sub-chamber 112" which is identical to the first one. This solution allows increasing the length that the fiber rovings travel in contact with the molten polymer, thereby improving impregnation, with the same fluid polymer ejection flow.

In addition, it is possible to increase the number of ejector stakes 15 simply by adding, after the first ejection sub-chamber 111, a second ejection sub-chamber identical to the first one. In this case, a different pipe fitting 3 will be required. This solution allows providing a greater flow rate for the fluid polymer, other conditions of the fluid polymer ejection flow being the same.

In accordance with the embodiments illustrated in the annexed figures, the stakes 14 are mounted on shoulders 141 housed in suitable seats 142 that are formed within the impregnation chamber 11. The shoulders 141 and the respective stakes 14 form, thereby, units independent from the structure of the impregnation chamber 11, and thus can be easily removed from the respective seats 142.

This particular solution, first of all, allows the worn stakes 14 to be easily replaced, mainly worn due to the sliding of the glass fibers which are particularly abrasive.

Furthermore, in accordance with an embodiment, the relative position of the stakes 14 on the shoulders 141 can be adjusted such that more or less marked direction changes can be imposed to the fiber rovings by changing the width of the contact curves 72 of the fibers with the stakes 14.

In the illustrated embodiments, almost all the stakes 14 are arranged in one direction, i.e. they are almost all parallel to each other. The only exception are those stakes 14' that are angled relative to the stakes 14 described above.

When provided, the angled stakes 14' are arranged within the impregnation chamber 11, preferably mounted on other stakes such as to be perpendicular thereto. They also have the function to deflect the pathway of the fibers, but on a different plane from that on which the stakes 14 described above act.

In accordance with the embodiment illustrated in Fig. 3.b, for example, the angled stakes 14' are arranged near the outlet nozzles 13 and have the function of deflecting the pathway of the fibers which are already almost completely impregnated, such that more than one roving 8 can be caused to converge to one individual outlet nozzle 13.

The stakes 14 and 14' can be variously recombined in order to meet particular requirements. In accordance with other embodiments of the impregnation chamber 11, series of stakes can also be arranged with inclinations other than those illustrated and/or inclinations varying in the direction A.

In accordance with still other embodiments, stakes can also be arranged which are conical or any shape suitable to the particular requirements.

In accordance with several possible embodiments, the impregnation chamber 11 comprises one or more plugs 110. The plugs 110 have suitable shapes to be inserted in the spaces of the impregnation chambers 11 which are not involved with the stakes 14, the ejector stakes 15 or the fiber pathway.

The plugs 110 have a dual function. First of all, their use allows reducing the amount of fluid polymer required to fill the impregnation chamber 11 and for normal running in the production cycle.

Secondly, the plugs 110 can occupy those areas in the impregnation chamber 11 where the geometry of the pathway induces a stagnation of the polymer. Due to these stagnation areas, in fact, one can easily check whether a certain amount of polymer remains within the impregnation chamber 11 for too long. If the polymer is exposed to the high temperature of the impregnation chamber 11 for a long time, the appearance or, worse, the mechanical characteristics of the polymer may be degraded. The provision of the plugs 110 within said stagnation areas allows the polymer to regularly flow through the impregnation chamber 11.

In accordance with the embodiment illustrated in Fig. 3.a and 4.a, the impregnation chamber 11 comprises, for example, a plug 110 overhanging the pathway of the fibers and other plugs 110' and 110" that join the interior of the impregnation chamber 11 with the area adjacent the inlet nozzles 12 and the area adjacent the outlet nozzles 13, respectively.

In accordance with other embodiments, such as those from Fig. 4.c, the plugs 110 can be provided by suitably shaping the inner walls of the impregnation chamber 11, rather than by means of individual pieces such as in the embodiment from Fig. 3.a and 4.a The plug 110" from Fig. 4.c is obtained by suitably shaping the bottom wall of the impregnation chamber 11.

As stated above, the pultrusion system and particularly the impregnator 10 are suitable to manufacture polymer-matrix prepregs charged with long fibers.

Both organic and inorganic fibers can be used. Among organic fibers, aromatic polyamide can be mentioned, which is also called polyaramid, such as Kevlar^{®} available from Du-Pont. Among inorganic fibers, glass, graphite (or carbon) fibers and stainless steel fibers can be mentioned.

The thermoplastic polymers that can be used to obtain the matrixes are: Acrylonitrile / Butadien / Styrene, Acrylonitrile / Butadien / Styrene Polycarbonate, Acrylonitrile / Butadien / Styrene Polyvinylchlorid, Blend of Acrylonitrile / Butadien / Styrene and Polyurethane, Acrylonitrile / Ethylene - Propylenediene / Styrene, Acrylonitrile / Styrene / Acrylate, Blend of Acrylonitrile / Styrene / Acrylate and Polycarbonate, High-Density polyethylene, Highimpact Polystyrene, Liquid Crystal Polymer, Low-Density Polyethylene, Linear Low-Density Polyethylene, Polyamide, Polyxylylene Adipamide, Blend of Polyamide and Polyphenylene Ether, Polyacryle Therketone, PolyamideImide, Polyaryl Amide, Polyarylsulfone, Polyarylsulfone, Polybutylene Terephthalate, Blend of Polybutylene Terephthalate and Acrylonitrile / Butadiene / Styrene, Blend of Polybutylene Terephthalate and Polycarbonate, Polycarbonate, Polycarbonate/Polybutylene Terephthalate, Polycarbonate / Polyethylene Terephthalate, Polycarbonate / Acrylonitrile Butadiene Styrene Blend, Polyethylene, Polyetheretherketone, Polyetheretherketoneketone, High-Density Polyethylene, Polyetherimide, Polyetherketone, Polyetherketoneketone, Low-Density Polyethylene, Low-Density Polyethylene / High-Density Polyethylene, Linear Low-Density Polyethylene / Very Low-Density Polyethylene, Linear Low-Density Polyethylene, Polyether Sulfone, Polyethylene Terephthalate, Polymethylmethacrylate (Acrylic), Polyoxymethylene (Acetal), Polypropylene, Polyphthalamide, Polyphenylene Ether, Blend of polyphenylene Ether and Polyamide, Blend of Polyphenylene Ether and Polystyrene, Blend of Polyphenylene Ether and Styrene / Butadien, Polyphenylene Oxide, Polyphenylene Oxide / Polyamide, Polyphenylene Oxide / Polystyrene, Polyphenylene Sulfide, Polyphenylene Sulfone, Polypropylene Terephthalate, Polystyrene, Polystyrene / Polyphenylene Oxide, Blend of Polystyrene and Polyethylene.

As an alternative to the thermoplastic polymers listed above, the fibers can be impregnated with thermoset matrixes, such as with an epoxy matrix. In this case, the manufacturing process of the prepregs will not include heating the impregnator 10.

As may be seen in the annexed figures, the pipe fitting 3, which communicates the dispenser 2 with the impregnator 10, imposes a 90°angle to the fluid polymer flow.

This characteristic of the pipe fitting 3 allows a configuration of the system 1 in which the drawing direction of the dry fibers 7 and the impregnated fibers 8 are parallel to the operating direction of the worm screw of the extruder 2. Such a configuration of the system 1 is particularly advantageous because it allows the pipe fitting 3 and the impregnator 10 to be easily attached to an extruder 2, which is already installed in an industrial building, without having to adjust the orientation thereof.

In accordance with an embodiment, between the extruder 2 and the impregnator 10, there is placed a diverter valve (not illustrated) to carry out the discharge of polymer when the system is started.

The operation of the pultrusion system 1 is briefly described below.

When the system is started, the ends of the dry fiber rovings 7 are passed through the inlet nozzles 12. The impregnation chamber 11 is opened, for example by lifting the upper wall, such as to allow the dry fibers to be properly arranged along the impregnation pathway. The ends of the rovings are then passed through the outlet nozzles 13 and sent to the drawing device 5.

The extruder 2 supplying the fluid polymer to the impregnator 10, and the heating means of the impregnation chamber 11 preventing the molten polymer from cooling are then started.

When the polymer starts flowing from the ejector stakes 15, the previously heated fibers are tensioned by means of the drawing device 5.

When the pultrusion system 1 is normally running, the whole impregnation chamber 1 is filled with molten polymer and the fiber rovings flow in the bath therein. The flow rate of the polymer exiting from the impregnation chamber 11 drawn by the fibers through the outlet nozzles 13 has to be equal to the amount of polymer which is fed by the extruder 2 through the ejection areas 16.

The impregnated fiber rovings 8, when they pass through the outlet nozzles 13, are shaped as desired (typically, with circular section); outside the impregnation chamber, they cool down such as to hold the shape they have been given, and reach the drawing device 5 already in the solid state.

The drawing device 5 ensures the feeding of the dry fiber rovings 7 to the impregnator 10 and the impregnated fiber rovings 8 to the cutting device 6. This cutting device 6 reduces the impregnated fiber rovings 8 to the desired length, thereby originating the long-fiber prepregs as desired, such as the long-fiber pellets 9.

In accordance with a preferred embodiment, the pellets 9 are 8 mm long or more, and have a diameter of 1 mm or more. The diameter of the prepregs can be changed by changing the diameter of the outlet nozzles 13.

From what has been stated above relative to the long-fiber prepregs, the pellets 9 manufactured by the system according to the invention, contain fiber pieces of substantially the same length as the pellets. In accordance with a preferred embodiment, the pellets 9 thus contain fiber pieces of 8 mm length or more.

It should be understood that variations and/or additions may be provided to what has been described and illustrated above, without departing from the scope of the invention.

Obviously, to the impregnator 10 and the pultrusion system 1 according to the present invention, those skilled in the art, aiming at satisfying contingent and specific requirements, may carry out a number of modifications and variations, all being however contemplated within the scope of protection of the invention, such as defined in the annexed claims.

## Claims

1. A device (10) for manufacturing polymer prepregs containing long fibers, comprising:
an impregnation chamber (11) having an inlet nozzle (12) and an outlet nozzle (13), through which the fibers (7, 8) are drawn;
a plurality of stakes (14, 15) suitable to impose a broken-line run to the fibers, at least one of said stakes (15) comprising an ejection area (16) for the fluid polymer, said ejection area (16) comprising a plurality of ejection holes (17) hydraulically connected with a dispenser (2) for fluid polymer.

2. The device, or impregnator (10), according to claim 1, comprising an outlet nozzle (13) for each inlet nozzle (12).

3. The impregnator (10) according to claim 1, comprising a lower number or outlet nozzles (13) than the number of inlet nozzles (12).

4. The impregnator (10) according to claim 1, wherein the diameter of said stakes (14, 15) ranges between 5 mm and 200 mm.

5. The impregnator (10) according to claim 4, wherein the at least one stake (15) comprising the ejection area (16) has a diameter ranging between 10 mm and 200 mm.

6. The impregnator (10) according to claim 4, wherein those stakes (14) that do not comprise the ejection area (16) have a diameter ranging between 5 mm and 50 mm.

7. The impregnator (10) according to any preceding claim, wherein said stakes (14, 15) are arranged transversal to the direction (A) of fibers (7,8).

8. The impregnator (10) according to the preceding claim, comprising stakes (14, 14') which are angled to each other.

9. The impregnator (10) according to any of the preceding claims, wherein said broken line run imposed to the fibers (7, 8) comprises rectilinear tracts (71) which are joined to each other by curves (72) that the fibers (7, 8) make for adapting to the profile of the stakes (14, 15).

10. The impregnator (10) according to any of the preceding claims, wherein said ejection holes (17) have a radial direction relative to the ejector stake (15).

11. The impregnator (10) according to any of the preceding claims, wherein the diameter of said ejection holes (17) ranges between 0,5 mm and 2,5 mm.

12. The impregnator (10) according to any of the preceding claims, wherein the curve (72) imposed to the trajectory of the fiber (7) by said ejector stake (15) coincides with said ejection area (16).

13. The impregnator (10) according to any of the preceding claims, wherein said ejection area (16) is obtained in a trench (19) which is provided on the profile of the ejector stake (15).

14. The impregnator (10) according to any of the preceding claims, wherein said ejection holes (17) are arranged in longitudinal arrays relative to the direction (A) of the fibers (7,8).

15. The impregnator (10) according to the preceding claim, wherein said arrays of ejection holes (17) are offset from each other such as to obtain an overall staggered, quincuncial arrangement for the ejection holes (17).

16. The impregnator (10) according to any of the preceding claims, wherein the width of the ejection areas (16, 16') increases in the direction (A) of the fibers.

17. The impregnator (10) according to any of the preceding claims, wherein the number of ejection holes (17) in the ejection areas (16, 16') increases in the direction (A) of the fibers.

18. The impregnator (10) according to any of the preceding claims, wherein the width of the trenches (19) increases in the direction (A) of the fibers.

19. The impregnator (10) according to any of the preceding claims, wherein the impregnation chamber (11) further comprises heating means (20) suitable to maintain the thermoplastic polymer in a molten state.

20. The impregnator (10) according to any preceding claim, wherein the impregnation chamber (11) further comprises a temperature-detecting probe (21).

21. The impregnator (10) according to claims 19 e 20, wherein said heating means comprise electric resistances (20) which are controlled by said probe (21) comprising a thermocouple.

22. The impregnator (10) according to any of the preceding claims, wherein the impregnation chamber (11) is divided in a first ejection sub-chamber (111) and a second continuity sub-chamber (112).

23. The impregnator (10) according to the preceding claim, wherein said ejection (111) and continuity sub-chambers (112) are formed to be modular.

24. The impregnator (10) according to any of the preceding claims, wherein at least some of said stakes (14) are mounted on shoulders (141), thereby forming units independent from the structure of the impregnation chamber (11).

25. The impregnator (10) according to any of the preceding claims, wherein the relative position of the stakes (14) on the shoulders (141) can be adjusted.

26. The impregnator (10) according to any of the preceding claims, wherein the impregnation chamber (11) further comprises plugs (110) suitable to be inserted in those spaces within the impregnation chamber (11) that are not involved with the stakes (14, 15) or the fiber pathway (7, 8).

27. A system (1) for manufacturing polymeric prepregs containing long-fiber, comprising a impregnator (10) according to any of the preceding claims.

28. The system (1) according to claim 27, further comprising:
- a dispenser (2) for fluid polymer;
- a pipe fitting (3) suitable to put the dispenser (2) in fluid communication with the impregnator (10);
- reels (4) suitable to provide dry fiber rovings (7);
- a drawing device (5) suitable to apply a tensile force to impregnated fiber rovings (8); and
- a cutting device (6) suitable to cut said impregnated fiber rovings (8).

29. The system (1) according to the preceding claim, wherein said dispenser for fluid polymer comprises an extruder (2) of molten thermoplastic polymer.

30. The system (1) according to the preceding claim, wherein said dispenser (2) for fluid polymer defines an operating direction.

31. The system (1) according to the preceding claim, wherein said pipe fitting (3) imposes a 90° angle to the fluid polymer flow, thereby allowing a configuration of said system (1) wherein the drawing direction (A) of the fibers (7, 8) is parallel to the operating direction of said dispenser (2).

32. The system (1) according to any claim 28 to 31, further comprising a diverter valve placed between the dispenser (2) and the impregnator (10) suitable to carry out the drainage of said polymer when the system (1) is started.
